# EUROPEAN PATENT APPLICATION

(11) **EP 4 545 573 A1**
(43) Date of publication of application: **30.04.2025**
(21) Application number: 24203348.8
(22) Date of filing: 27.09.2024
(51) Int. Cl.: C08F 14/06, C08K 5/14

(54) **AQUEOUS ORGANIC PEROXIDE EMULSIONS**

(30) Priority: 23.10.2023 EP 23204976
(71) Applicant: Nouryon Chemicals International B.V., 1101 BZ Amsterdam (NL)
(72) Inventor: GERRITSEN, René, 1101 BZ Amsterdam (NL); HEKKERT, Richard Hermannes Johannes, 1101 BZ Amsterdam (NL); KEIJZER, Ester Elisabeth Antonia, 1101 BZ Amsterdam (NL); GROOTELAAR, Chiel Mark Johannes, 1101 BZ Amsterdam (NL)
(74) Representative: LKGlobal UK Ltd.

(57) **Abstract**

The present disclosure relates to the use of an aqueous organic peroxide emulsion comprising from 0 to 0.17 wt.% of at least one emulsifier, to prepare polyvinyl chloride with an increased rate of drying.

## Description

### Technical field

The present invention relates to aqueous emulsions of organic peroxides that contain a reduced amount of emulsifier. The invention further relates to the use of such emulsions in vinyl chloride monomer (VCM) polymerization to prepare polyvinyl chloride (PVC) with improved drying characteristics.

### Background

Organic peroxides are known in the technical field to be effective initiators for the polymerization of VCM to produce PVC. Commercially, these peroxides are available as stable aqueous emulsions comprising a protective colloid, an emulsifier, and an anti-freeze agent.

In WO 03/095500 it is disclosed how a combination of di(2-ethylhexyl) peroxydicarbonate, protective colloid, non-ionic emulsifier and anti-freeze agent can result in stable aqueous emulsions having small peroxide droplet sizes and narrow droplet size distributions, which are advantageous when used in PVC production. In Example 1, an aqueous emulsion is made with 55 %w/w di(2-ethylhexyl) peroxydicarbonate, 0.8 %w/w 62-68% saponified polyvinyl acetate, 0.3 %w/w ethoxylated stearyl alcohol, water and methanol. When the ethoxylated stearyl alcohol emulsifier is omitted in comparative Example A, the PVC polymer resulting from a standard suspension polymerisation of VCM is adversely affected.

Similarly, in WO 2011/015567 an aqueous organic peroxide emulsion containing 40 wt.% diisobutyryl peroxide, 1.1 wt.% 62-68% hydrolyzed polyvinyl acetate, 0.3 wt.% ethoxylated stearyl alcohol, water and methanol, is shown to result in a stable aqueous emulsion having a small peroxide droplet size and a narrow droplet size distribution (with 99% of the dispersed phase volume well below 10 microns).

However, it has now been found that PVC produced using these stable aqueous organic peroxide emulsions takes an unsatisfactory long time to dry.

Accordingly, there is a need for aqueous organic peroxide emulsions wherein this issue is addressed.

### Description

We have now found that, surprisingly, improved aqueous emulsions of organic peroxide can be made with significantly lower amounts of emulsifier. These aqueous emulsions are not only stable but have been found to produce high-quality PVC with improved drying properties.

Accordingly, in a first aspect, the present disclosure is directed to the use of an aqueous organic peroxide emulsion comprising from 0 to 0.17 wt.% of at least one emulsifier, to prepare polyvinyl chloride with an increased rate of drying.

Advantageously, despite the low concentration of emulsifier - or none at all - stable aqueous emulsions have been prepared with small peroxide droplet sizes and narrow droplet size distributions that are beneficial to PVC production. Moreover, the use of these emulsions in the polymerization of VCM has been found to produce high-quality PVC with unexpected improvements in drying properties (the drying rate of the resulting PVC polymer was substantially increased, thus shortening the drying time of the polymer, which is important for the industrial-scale production of PVC).

Preferably, the aqueous organic peroxide emulsion for use according to the first aspect of the invention comprises:
(i) from 25 to 70 wt.% of at least one organic peroxide having a self-accelerating decomposition temperature (SADT) of 25 °C or less;
(ii) from 1.4 to 6.0 wt.% of at least one protective colloid;
(iii) from 0 to 0.17 wt.% of at least one emulsifier; and
(iv) at least one anti-freeze agent.

The SADT is the lowest ambient temperature at which self-accelerating decomposition occurs with a product in the packaging as used for transport. The method for determining the SADT of an organic peroxide is set out in detail in the United Nations Manual of Tests and Criteria, Seventh Revised Edition (2019), Test Series H.4: Heat accumulation storage test, which said manual and test method is hereby incorporated by reference. This method determines the minimum constant air environment temperature at which thermally unstable substances undergo exothermic decomposition at conditions representative of the substance when packaged. The method is based on the Semenov theory of thermal explosion i.e., the main resistance to heat flow is considered to be at the vessel walls. The method can be used for the determination of the SADT of a substance in its packaging, including IBCs and small tanks (up to 2 m³). For the avoidance of doubt, the SADT values referred to herein are determined in accordance with the method set out in the above referenced UN Manual (Test Series H.4: Heat accumulation storage test) for organic peroxides in a high-density polyethylene (HDPE) packaging with a volume of 20-30 liters.

The aqueous organic peroxide emulsions for use according to the first aspect of the invention preferably contain at least one organic peroxide having a low SADT (i.e., 25 °C or less), preferably 20 °C or less, preferably 15 °C or less, preferably 10 °C or less, preferably 5 °C or less, and may be about 0 °C or less. Preferred organic peroxides include peroxyesters, peroxydicarbonates and diacyl peroxides. Preferred are diacyl peroxides and peroxydicarbonates. Examples of preferred organic peroxides for use in accordance with the present invention are diisobutyryl peroxide (SADT 0°C), cumyl peroxyneodecanoate (SADT 10°C), 1,1,3,3-tetramethylbutyl peroxyneodecanoate (SADT 15°C), cumyl peroxy-neoheptanoate (SADT 10°C), tert-amyl peroxyneodecanoate (SADT 20°C), di-sec-butyl peroxydicarbonate (SADT 0°C), di(2-ethylhexyl) peroxydicarbonate (SADT 5°C), tert-butyl peroxyneodecanoate (SADT 20°C), 1,1,3,3-tetramethylbutyl peroxypivalate (SADT 20°C); tert-amyl peroxypivalate (SADT 25°C), tert-butyl peroxypivalate (SADT 25°C), di(3,5,5-trimethylhexanoyl) peroxide (SADT 25°C), di-n-propyl peroxydicarbonate (SADT 0°C), diisopropyl peroxydicarbonate (SADT 5°C), di-n-butyl peroxydicarbonate (SADT 0°C), di(2-ethoxyethyl) peroxydicarbonate (SADT 10°C), 1,3-di(prop-2,2-diyl)benzene bis(neodecanoyl)peroxide (SADT 10°C), 3-hydroxy-1,1-dimethylbutyl peroxyneodecanoate (SADT 10°C), di-n-butyryl peroxide (SADT 25°C), or mixtures thereof.

The aqueous organic peroxide emulsions for use according to the first aspect of the invention typically contain from 25 to 70 wt.% of organic peroxide, based on the total weight of the emulsion. Preferably, the amount of organic peroxide in the emulsion is from 30 to 65 wt.%, more preferably 35 to 60 wt.%.

The amount of water in the emulsion of the first aspect typically ranges from 20 to 60 wt.%, preferably from 25 to 50 wt.%, and more preferably from 25 to 40 wt.%, based on the total weight of the emulsion.

The aqueous organic peroxide emulsions for use according to the first aspect of the invention preferably contain at least one protective colloid. Any conventional protective colloid can be used. Examples of suitable protective colloids are celluloses and partially hydrolyzed (or saponified) polyvinyl acetates. Partially hydrolyzed polyvinyl acetate (PVA) is the preferred protective colloid to be present in the aqueous emulsion. Preferably, the PVA has a degree of hydrolysis of at least 50 mole%, more preferably at least 55 mole%, and most preferably at least 60 mole%, and preferably at most 90 mole%, more preferably at most 80 mole%, and most preferably at most 70 mole%. Preferably, the PVA is randomly hydrolyzed, as opposed to blocky hydrolyzed.

Instead of using just one type of PVA, a blend of two or more PVAs can also be used. In that case, the blend can be seen as just one PVA of which the degree of hydrolysis is the weight average degree of hydrolysis of the PVA's. Preferably, such a blend of PVAs does not comprise more than 0.2 % of a PVA with a degree of hydrolysis below 50 mole% or above 90 mole%.

The amount of protective colloid used in the emulsions of the first aspect of the invention will depend on the type and amount of organic peroxide and the desired viscosity of the final emulsion, but it is typically used in an amount of from 1.4 to 6.0 wt.%, and preferably from 1.5 to 5 wt.%, based on the total weight of the emulsion. For example, when the organic peroxide is di(2-ethylhexyl) peroxydicarbonate, the protective colloid is typically used in amount of from 1.4 to 3.0 wt.%, preferably from 1.5 to 2.0 wt.%, based on the total weight of the emulsion.

The emulsions for use in accordance with the first aspect of the present invention contain from 0 to 0.17 wt.%, preferably from 0 to 0.15 wt.%, preferably from 0 to 0.10 wt.%, preferably from 0 to 0.05 wt.%, and more preferably 0 wt.%, based on the total weight of the emulsion, of at least one conventional emulsifying agent.

Conventional emulsifying agents are known to the person skilled in this art and they include non-ionic, anionic, cationic, and amphoteric surfactants, and mixtures thereof. Examples of surfactants that are typically used in aqueous organic peroxide emulsions include alkylene oxide block-copolymers, alkoxylated fatty alcohols (including ethoxylated and/or propoxylated C6-C22 fatty alcohols, such as ethoxylated stearyl alcohol, ethoxylated cetyl alcohol, and mixtures thereof), and alkoxylated fatty acids (including ethoxylated and/or propoxylated C6-C22 fatty acids). Additional examples include sorbitan fatty esters, ethoxylated sorbitan fatty esters, ethoxylated castor oil, and oxyalkylenated vegetable and animal oils (hydrogenated or not).

When an emulsifier is added to the emulsions for use according to the first aspect of the present invention, preferably a non-ionic surfactant, more preferably having an HLB value of 8 or higher, preferably 10 or higher, even more preferably 14 or higher, is used. The HLB value stands for the hydrophilic-lipophilic balance, as described in *"*The Atlas HLB-System, a time saving guide to emulsifier selection", published by Atlas Chemical Industries Inc., 1963. However, emulsifiers are preferably omitted from the emulsion. That is, the emulsions for use in accordance with the first aspect of the present invention are preferably substantially free of emulsifiers.

The emulsions for use according to the first aspect of the invention preferably also contain at least one anti-freeze agent and may comprise a combination of two or more antifreeze agents. Any conventional anti-freeze agent can be used. Preferably, use is made of methanol, ethanol, propanol, isopropanol, (ethylene) glycol, propanediol, glycerol, and mixtures thereof, more preferably, methanol, ethanol, propanediol, and mixtures thereof. These compounds are known to have hardly any effect on polymerization processes in which peroxide emulsions are used. Most preferably, methanol is used as the anti-freeze agent.

The amount of anti-freeze is typically chosen such that the emulsion does not freeze at a temperature of -10 °C, preferably -15 °C, and most preferably -20 °C or -25 °C. The amount of freezing point suppressant to be used will depend on the type of anti-freeze, or mixture of anti-freezes, that is used. Suitably, first a mixture of the anti-freeze and water is made which contains a sufficient amount of the anti-freeze to be pourable at the indicated temperatures. This mixture can then be used in the further process to make the emulsions. A skilled person will have no difficulties in balancing the ratio of water to anti-freeze agent(s). Typically, the amount of anti-freeze agent used in the emulsion according to the present invention will be lower than the amount of water.

In a second aspect, the present disclosure is directed to an aqueous organic peroxide emulsion comprising:
(i) from 30 to 45 wt.% of diisobutyryl peroxide;
(ii) from 2.0 to 6.0 wt.% of at least one protective colloid;
(iii) from 0 to 0.17 wt.% of at least one emulsifier; and
(iv) at least one anti-freeze agent.

By combining a high concentration of diisobutyryl peroxide (SADT 0°C) with a low concentration of emulsifier, stable aqueous emulsions have been prepared that are surprisingly beneficial to PVC production. In particular, the inclusion of less emulsifier - or none at all - into the resulting PVC polymer has been found to result in faster drying characteristics, which when coupled with the possible continuous and/or intermittent dosing of the peroxide emulsion, saves significant time in the production run.

The aqueous organic peroxide emulsion of the second aspect of the invention contains from 30 to 45 wt.% of diisobutyryl peroxide (CAS No. 3437-84-1), based on the total weight of the emulsion. Preferably, the amount of diisobutyryl peroxide in the aqueous emulsion is from 35 to 42 wt.%.

The amount of water in the aqueous organic peroxide emulsion of the second aspect typically ranges from 20 to 60 wt.%, preferably from 25 to 50 wt.%, and more preferably from 25 to 40 wt.%, based on the total weight of the emulsion.

The aqueous organic peroxide emulsion of the second aspect of the invention contains at least one protective colloid in an amount of from 2.0 to 6.0 wt.%, preferably from 2.5 to 4.0 wt.%, and more preferably from 2.7 to 3.5 wt.%, based on the total weight of the emulsion. As in the first aspect of the invention, any conventional protective colloid can be used. Examples of suitable protective colloids are celluloses and partially hydrolyzed (or saponified) polyvinyl acetates. Partially hydrolyzed polyvinyl acetate (PVA) is the preferred protective colloid to be present in the aqueous emulsion. Preferably, the PVA has a degree of hydrolysis of at least 50 mole%, more preferably at least 55 mole%, and most preferably at least 60 mole%, and preferably at most 90 mole%, more preferably at most 80 mole%, and most preferably at most 70 mole%. Preferably, the PVA is randomly hydrolyzed, as opposed to blocky hydrolyzed.

Instead of using just one type of PVA, a blend of two or more PVAs can also be used. In that case, the blend can be seen as just one PVA of which the degree of hydrolysis is the weight average degree of hydrolysis of the PVA's. Preferably, such a blend of PVAs does not comprise more than 0.2 % of a PVA with a degree of hydrolysis below 50 mole% or above 90 mole%.

The aqueous organic peroxide emulsion in accordance with the second aspect of the invention contains from 0 to 0.17 wt.%, preferably from 0 to 0.15 wt.%, preferably from 0 to 0.10 wt.%, preferably from 0 to 0.05 wt.%, and more preferably 0 wt.%, based on the total weight of the emulsion, of at least one conventional emulsifying agent.

Conventional emulsifying agents are known to the person skilled in this art and they include non-ionic, anionic, cationic, and amphoteric surfactants, and mixtures thereof. Examples of surfactants that are typically used in aqueous organic peroxide emulsions include alkylene oxide block-copolymers, alkoxylated fatty alcohols (including ethoxylated and/or propoxylated fatty alcohols), and alkoxylated fatty acids (including ethoxylated and/or propoxylated fatty acids).

As in the first aspect of the invention, when an emulsifier is added to an emulsion according to the second aspect of the present invention, preferably a non-ionic surfactant, more preferably having an HLB value of 10 or higher, even more preferably 14 or higher, is used.

However, emulsifiers are preferably omitted from the emulsion. That is, the emulsions of the second aspect of the present invention are preferably substantially free of emulsifiers

The aqueous organic peroxide emulsions according to the second aspect of the invention also contain at least one anti-freeze agent and may comprise a combination of two or more antifreeze agents. Any conventional anti-freeze agent can be used. Preferably, use is made of methanol, ethanol, propanol, isopropanol, (ethylene) glycol, propanediol, glycerol, and mixtures thereof, more preferably, methanol, ethanol, propanediol, and mixtures thereof. These compounds are known to have hardly any effect on polymerization processes in which peroxide emulsions are used. Most preferably, methanol is used as the anti-freeze agent.

The amount of anti-freeze is typically chosen such that the emulsion does not freeze at a temperature of -10 °C, preferably -15 °C, preferably -20 °C, and most preferably -25 °C. The amount of freezing point suppressant to be used will depend on the type of anti-freeze, or mixture of anti-freezes, that is used. Suitably, first a mixture of the anti-freeze and water is made which contains a sufficient amount of the anti-freeze to be pourable at the indicated temperatures. This mixture can then be used in the further process to make the emulsions. A skilled person will have no difficulties in balancing the ratio of water to anti-freeze agent(s). Typically, the amount of anti-freeze agent used in the emulsion according to the present invention will be lower than the amount of water.

The aqueous organic peroxide emulsions of the first and second aspects of the present invention optionally may also contain other additives including pH-adjusting agents such as phosphate and citrate buffers, sequestering agents, biocides, e.g., fungicides, antiozonants, antioxidants, anti-degradants, U.V. stabilizers, coagents, comonomers, antistatic agents, blowing agents, mould release agents, and process oils. These additives may be added in their usual amounts.

The aqueous organic peroxide emulsions of the first and second aspects of the invention can be produced in a conventional manner. Typically, the ingredients of the emulsion are mixed and/or homogenized using well-known equipment, such as high-speed mixers, colloid mills, pearl mills, pressure homogenizers, fluidizers, and ultrasonic homogenizers. Because the peroxides may not be stable at higher temperatures, the mixing and/or homogenizing should be done well below the SADT of the organic peroxide.

The aqueous organic peroxide emulsions of the first and second aspects of the invention can also be produced continuously using an in-line emulsifier, by, first, cooling an organic peroxide-containing pre-emulsion mixture to a temperature of at least 12 °C lower than the SADT of the organic peroxide prior to being fed to an in-line emulsifier, followed by cooling the organic peroxide emulsion to a temperature of at least 12 °C lower than the SADT of the organic peroxide using a downstream heat exchanger.

The organic peroxide may be introduced into the emulsification process in the form of a phlegmatized organic peroxide. In that respect, any appropriate phlegmatizer may be used to dilute and/or dissolve the peroxide, such as inert phlegmatizing solvents. Such inert phlegmatizing solvents are well known in the art and include, for instance, isododecane and mineral oils. For example, 3-hydroxy-1 ,1-dimethylbutyl peroxyneodecanoate (SADT 10°C) is commercially available in phlegmatized form from Nouryon^{®} as a 75% solution in odorless mineral spirits ("Trigonox^{®} 193-CH75").

The present disclosure also relates to the use of the above-described aqueous diisobutyryl peroxide emulsions of the second aspect in polymerization processes, cross-linking reactions, the curing of unsaturated polyester resins, polymer modification processes, and other reactions involving free radicals, like the synthesis of certain chemicals.

The diisobutyryl peroxide emulsions of the second aspect of the invention preferably are used in polymerization processes, more preferably, the polymerization of VCM and copolymerization of VCM with styrene or (meth)acrylate. Most preferred is the use of the emulsion in accordance with the present invention in a suspension polymerization process for preparing PVC. This polymerization process preferably includes the step of continuously and/or intermittently dosing the emulsion to the polymerization reactor at the polymerization temperature. Such processes are described in WO 2000/017245.

The improved drying characteristics of the resulting PVC polymer, i.e., the increased rate of drying, is quantified in the below worked examples, and is intended to include a normalized drying rate of greater than 0.840 at time t* of 0.5 as determined by the method set out in the journal article *"*Dehydration and drying poly(vinyl)chloride (PVC) porous grains: 2. Thermogravimetric analysis and numerical simulations", P. Agaciak et al. / Colloids and Surfaces A: Physicochem. Eng. Aspects 470 (2015) 120-129, which article and test method is hereby incorporated by reference.

Thus, the present disclosure also relates to a process for preparing a polyvinyl chloride (PVC) polymer with a normalized drying rate of greater than 0.840 at time t* of 0.5 (as determined by the method set out in *"*Dehydration and drying poly(vinyl)chloride (PVC) porous grains: 2. Thermogravimetric analysis and numerical simulations", P. Agaciak et al. / Colloids and Surfaces A: Physicochem. Eng. Aspects 470 (2015) 120-129), the process comprising polymerizing monovinyl chloride monomer (VCM) using an aqueous organic peroxide emulsion, wherein the aqueous organic peroxide emulsion comprises from 0 to 0.17 wt.% emulsifier.

In this process, the aqueous organic peroxide emulsion may be as defined above in the first aspect.

It is noted that various elements of the present invention, including but not limited to preferred ranges for the various parameters, can be combined unless they are mutually exclusive.

The invention will be elucidated by the following Figures and Examples without being limited thereto or thereby.

### Figure

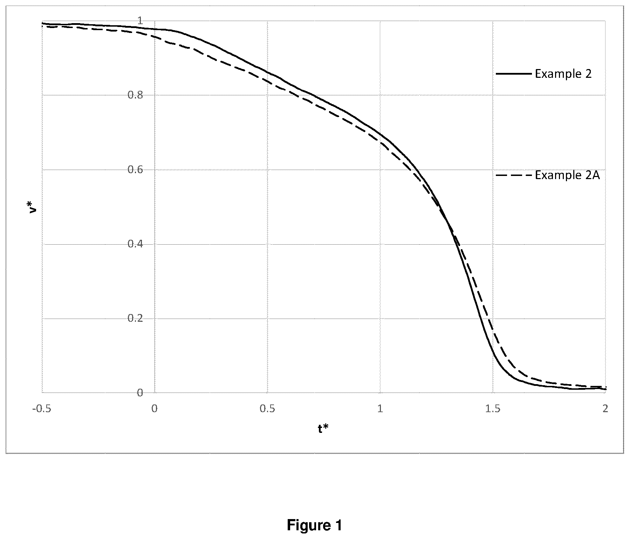

Figure 1 shows the adimensional drying rates of water inside the pores of the PVC samples prepared in Example 2 and Comparative Example 2A.

### Examples

### Example 1 and Comparative Example 1A

Two emulsions were made according to the following procedure to have the final amounts of components (i)-(iv) shown in Table 1.1.
1. Methanol and water were introduced into a double jacketed vessel.
2. PVA (polyvinyl acetate, degree of hydrolysis 65-70%) and optionally emulsifier (C16/C18 ethoxylated alcohol, HLB = 18) was added to the water/methanol mixture at room temperature and dissolved at approximately 250 rpm stirring speed for 30 minutes.
3. The aqueous mixture was cooled to below -10 °C, under stirring.
4. An oil phase containing 70 wt.% diisobutyryl peroxide in isododecane was added to the aqueous mixture with Ultra Turrax type S25N-25GM at low speed.
5. The oil phase was dispersed with maximum Ultra Turrax speed (2.5 minutes/kg of emulsion) while keeping the temperature below 0 °C. If needed to remain below this temperature, the Ultra Turrax action was temporally discontinued.
6. The emulsion was stored at -25 °C.

**Table 1.1**

| **Component** | **Example 1A** | **Example 1** |
|---|---|---|
| (i) Diisobutyryl peroxide (wt.%) | 40 | 40 |
| (ii) PVA (wt.%) | 1.3 | 3.0 |
| (iii) Emulsifier (wt.%) | 0.5 | - |
| (iv) Methanol (wt.%) | 14.5 | 14.5 |

The storage stability of the emulsions was determined by measuring the droplet volume distribution by means of a light scattering technique, using a Malvern type 3000 apparatus.

In Table 1.2, d99 (expressed in µm) is 99 percentile of the droplet volume distribution of the organic peroxide in the emulsion and d50 (expressed in µm) is 50 percentile of the droplet volume distribution of the organic peroxide in the emulsion. The emulsion samples were stored at -25 °C and the data was collected at room temperature.

**Table 1.2**

| **Droplet size (µm) after storage at -25°C:** | **Example 1A** | **Example 1** |
|---|---|---|
| 1 day - d50 / d99 | 0.5 / 1.0 | 0.8 / 1.4 |
| 1 week - d50 / d99 | 1.3 / 2.5 | n.d. |
| 2 weeks - d50 / d99 | n.d. | 1.8 / 3.9 |
| 4 weeks - d50 / d99 | 2.2 / 3.8 | 2.6 / 5.0 |
| 8 weeks - d50 / d99 | 2.8 / 5.0 | 3.5 / 6.4 |
| 12 weeks - d50 / d99 | 3.1 / 5.8 | 4.0 / 8.2 |

| | | |
|---|---|---|
| n.d. - not determined. | | |

The above data demonstrates that both emulsions were highly stable for at least 12 weeks (a 12-week droplet size d99 value of <10 µm is indicative of a highly stable aqueous organic peroxide emulsion). Thus, contrary to expectations, the inventors have managed to produce a highly stable, well-dispersed, aqueous emulsion of diisobutyryl peroxide, with no emulsifier. Furthermore, despite having no emulsifier present during emulsification, the aqueous organic peroxide emulsion of Example 1 is formed with an advantageously small peroxide droplet size and narrow droplet size distribution.

### PVC suspension polymerization process

Vinyl chloride (VCM) polymerizations were carried out according to a standard suspension polymerization process, using a 10-liter Buchi reactor equipped with a baffle, one flat-blade stirrer, a pressure transducer, a VCM feed line, a nitrogen purge line, a peroxide feed line, and a peroxide injection point.

The reactor was charged with 3480 g of demineralized water including 75.4 g of a 2% (w/w) solution of Alcotex^{®} B72 (polyvinylacetate/alcohol) and 11.6 g of a 2% (w/w) solution of Gohsenol GH23 (polyvinylacetate/alcohol). The reactor was then pressurized with nitrogen to 12 bar. If no leaks were observed, the reactor was depressurized to 75 mbar (while stirring) to remove the air and nitrogen. Subsequently, the reactor was charged with 2900 g of VCM. While charging the VCM, the reactor was heated to 52 °C in 30 minutes. At 52 °C the continuous dosing of the organic peroxide emulsion was started, after reaching maximum polymerization rate of 30 %/h in 40 minutes the exotherm increased the temperature further to its polymerization temperature of 57 °C. The polymerization was stopped when 83 % conversion was reached (calculated by temperature and pressure with the CiD software). The reactor was then cooled down and degassed. After removal of the residual VCM by evacuation, a sample of the reactor content was taken for analysis.

### Example 2 and Comparative Example 2A

PVC samples were produced according to the above polymerization process.

Example 2: PVC prepared using the aqueous organic peroxide emulsion of Example 1 (diluted with cold water to 0.5% diisobutyryl peroxide for the relatively small-scale polymerization (10 liters) and stored in an ice bath under stirring during the polymerization).

Comparative Example 2A: PVC prepared using the aqueous organic peroxide emulsion of Comparative Example 1A (diluted with cold water to 0.5% diisobutyryl peroxide for the relatively small-scale polymerization (10 liters) and stored in an ice bath under stirring during the polymerization).

Experiments were done to investigate the drying rates of the two PVC samples with thermogravimetry under dry nitrogen gas flow, as set out in detail in the journal article *"*Dehydration and drying poly(vinyl)chloride (PVC) porous grains: 2. Thermogravimetric analysis and numerical simulations", P. Agaciak et al. / Colloids and Surfaces A: Physicochem. Eng. Aspects 470 (2015) 120-129.

As explained in the article, the overall duration of the drying of a PVC sample depends on the free water, interstitial water, and internal water contents. To establish a comparison between the two PVC samples, the drying rate of the internal water content was normalized, as set out on page 123 of the article, such that:
- v* is the normalized drying rate;
- t* is the adimensional time, normalized by the time necessary to dry the same mass of pure water;
- when t < 0, water is evaporating between PVC particles; and
- when t > 0, water is evaporating from (or out of) the PVC particles.

The normalized drying rates are shown in Figure 1. Here, it can be seen that the PVC of Example 2 (for which v* is 0.861 at t* of 0.5 and 0.694 at t* of 1) dries rapidly while the PVC of Comparative Example 2A dries more slowly (for which v* is 0.837 at t* of 0.5 and 0.673 at t* of 1). In particular, the PVC of Example 2 is almost completely dry at t* = 1.6, while the PVC of Comparative Example 2A needs a longer time to reach the same dry state.

These results show that the inclusion of less (or no) emulsifier into the resulting PVC polymer results in faster drying characteristics, which in turn, saves time in the PVC production run.

### Example 3 and Comparative Example 3A

Two emulsions were made according to the following procedure to have the final amounts of components (i)-(iv) shown in Table 3.1.
1. Methanol and water were introduced into a double jacketed vessel.
2. PVA (polyvinyl acetate, degree of hydrolysis 65-70%) and optionally emulsifier (C16/C18 ethoxylated alcohol, HLB = 18) was added to the water/methanol mixture at room temperature and dissolved at approximately 250 rpm stirring speed for 30 minutes.
3. The aqueous mixture was cooled to below -10 °C, under stirring.
4. An organic peroxide composition containing 98 wt.% di(2-ethylhexyl) peroxydicarbonate was added to the aqueous mixture with Ultra Turrax type S25N-25GM at low speed.
5. The organic peroxide composition was dispersed with maximum Ultra Turrax speed (2.5 minutes/kg of emulsion) while keeping the temperature below 0 °C. If needed to remain below this temperature, the Ultra Turrax action was temporally discontinued.
6. The emulsion was stored at -20 °C.

**Table 3.1**

| **Component** | **Example 3A** | **Example 3** |
|---|---|---|
| (i) Di(2-ethylhexyl) peroxydicarbonate (wt.%) | 60 | 60 |
| (ii) PVA (wt.%) | 0.6 | 1.6 |
| (iii) Emulsifier (wt.%) | 0.3 | - |
| (iv) Methanol (wt.%) | 12 | 13 |

The storage stability of the emulsions was determined by measuring the droplet volume distribution by means of a light scattering technique, using a Malvern type 3000 apparatus.

In Table 3.2, d99 (expressed in µm) is 99 percentile of the droplet volume distribution of the organic peroxide in the emulsion and d50 (expressed in µm) is 50 percentile of the droplet volume distribution of the organic peroxide in the emulsion. The emulsion samples were stored at -20 °C and the data was collected at room temperature.

**Table 3.2**

| **Droplet size (µm) after storage at -20°C:** | **Example 3A** | **Example 3** |
|---|---|---|
| 1 day - d50 / d99 | 1.1 / 2.4 | 1.3 / 2.6 |
| 1 week - d50 / d99 | n.d. | n.d. |
| 2 weeks - d50 / d99 | 1.3 / 2.5 | 1.5 / 2.9 |
| 4 weeks - d50 / d99 | 1.4 / 2.7 | 1.7 / 3.3 |
| 8 weeks - d50 / d99 | 1.5 / 3.0 | 2.0 / 3.6 |
| 12 weeks - d50 / d99 | 1.8 / 3.3 | 2.3 / 4.4 |

| | | |
|---|---|---|
| n.d. - not determined. | | |

The above data demonstrates that both emulsions were highly stable for at least 12 weeks (a 12-week droplet size d99 value of <10 µm is indicative of a highly stable aqueous organic peroxide emulsion). Thus, contrary to expectations, the inventors have managed to produce a highly stable, well-dispersed, aqueous emulsion of di(2-ethylhexyl) peroxydicarbonate, with no emulsifier. Furthermore, despite having no emulsifier present during emulsification, the aqueous organic peroxide emulsion of Example 3 is formed with an advantageously small peroxide droplet size and narrow droplet size distribution.

Whilst the invention has been described with reference to an exemplary embodiment, it will be appreciated that various modifications are possible within the scope of the invention.

In this specification, unless expressly otherwise indicated, the word 'or' is used in the sense of an operator that returns a true value when either or both of the stated conditions is met, as opposed to the operator `exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. Use of an aqueous organic peroxide emulsion comprising from 0 to 0.17 wt.% of at least one emulsifier, to prepare polyvinyl chloride with an increased rate of drying.

2. The use as claimed in claim 1, wherein the aqueous organic peroxide emulsion comprises:
(i) from 25 to 70 wt.% of at least one organic peroxide having a self-accelerating decomposition temperature (SADT) of 25 °C or less;
(ii) from 1.4 to 6.0 wt.% of at least one protective colloid;
(iii) from 0 to 0.17 wt.% of at least one emulsifier; and
(iv) at least one anti-freeze agent,
the SADT values being determined in accordance with the method set out in the United Nations Manual of Tests and Criteria, Seventh Revised Edition (2019), Test Series H.4: Heat accumulation storage test, for organic peroxides in a high-density polyethylene (HDPE) packaging with a volume of 20-30 liters.

3. The use as claimed in claim 1 or claim 2, wherein the organic peroxide has a self-accelerating decomposition temperature (SADT) of 20 °C or less, preferably 15 °C or less, preferably 10 °C or less, preferably 5 °C or less, preferably 0 °C or less, the SADT values being determined in accordance with the method set out in the United Nations Manual of Tests and Criteria, Seventh Revised Edition (2019), Test Series H.4: Heat accumulation storage test, for organic peroxides in a high-density polyethylene (HDPE) packaging with a volume of 20-30 liters.

4. The use as claimed in any one of the preceding claims, wherein the organic peroxide is selected from peroxyesters, peroxydicarbonates, diacyl peroxides, or mixtures thereof, and is preferably selected from diisobutyryl peroxide (SADT 0°C), cumyl peroxyneodecanoate (SADT 10°C), 1,1,3,3-tetramethylbutyl peroxyneodecanoate (SADT 15°C), cumyl peroxy-neoheptanoate (SADT 10°C), tert-amyl peroxyneodecanoate (SADT 20°C), di-sec-butyl peroxydicarbonate (SADT 0°C), di(2-ethylhexyl) peroxydicarbonate (SADT 5°C), tert-butyl peroxyneodecanoate (SADT 20°C), 1,1,3,3-tetramethylbutyl peroxypivalate (SADT 20°C), tert-amyl peroxypivalate (SADT 25°C), tert-butyl peroxypivalate (SADT 25°C), di(3,5,5-trimethylhexanoyl) peroxide (SADT 25°C), di-n-propyl peroxy-dicarbonate (SADT 0°C), diisopropyl peroxydicarbonate (SADT 5°C), di-n-butyl peroxydicarbonate (SADT 0°C), di(2-ethoxyethyl) peroxydicarbonate (SADT 10°C), 1,3-di(prop-2,2-diyl)benzene bis(neodecanoyl)peroxide (SADT 10°C), 3-hydroxy-1,1-dimethylbutyl peroxyneodecanoate (SADT 10°C), di-n-butyryl peroxide (SADT 25°C), or mixtures thereof, the SADT values being determined in accordance with the method set out in the United Nations Manual of Tests and Criteria, Seventh Revised Edition (2019), Test Series H.4: Heat accumulation storage test, for organic peroxides in a high-density polyethylene (HDPE) packaging with a volume of 20-30 liters.

5. The use as claimed in any one of the preceding claims, wherein the protective colloid is a polyvinyl acetate with a degree of hydrolysis between 60 and 75% and/or the at least one emulsifier is a compound selected from the group consisting of alkylene oxide block-copolymers, ethoxylated fatty alcohols, ethoxylated fatty acids, and combinations thereof, having an HLB (hydrophile-lipophile balance) value of 8 or higher, preferably 10 or higher, more preferably 14 or higher.

6. The use as claimed in any one of the preceding claims, wherein no emulsifier is added to the aqueous emulsion.

7. The use as claimed in any one of the preceding claims, wherein the at least one anti-freeze agent is a compound selected from the group consisting of methanol, ethanol, propanol, isopropanol, (ethylene) glycol, propanediol, glycerol, and combinations thereof, preferably methanol, and is used in a quantity such that the emulsion does not freeze at a temperature of -10 °C

8. An aqueous organic peroxide emulsion comprising:
(i) from 30 to 45 wt.% of diisobutyryl peroxide;
(ii) from 2.0 to 6.0 wt.% of at least one protective colloid;
(iii) from 0 to 0.17 wt.% of at least one emulsifier; and
(iv) at least one anti-freeze agent.

9. The aqueous emulsion as claimed in claim 8, comprising from 35 to 42 wt.% diisobutyryl peroxide.

10. The aqueous emulsion as claimed in claim 8 or claim 9, comprising from 2.5 to 4.0 wt.% of at least one protective colloid, preferably from 2.7 to 3.5 wt.%.

11. The aqueous emulsion as claimed in any one of claims 8-10, wherein the protective colloid is a polyvinyl acetate with a degree of hydrolysis between 60 and 75%.

12. The aqueous emulsion as claimed in any one of claims 8-11, wherein the at least one emulsifier is a compound selected from the group consisting of alkylene oxide block-copolymers, ethoxylated fatty alcohols, ethoxylated fatty acids, and combinations thereof, having an HLB (hydrophile-lipophile balance) value of 10 or higher, preferably 14 or higher.

13. The aqueous emulsion as claimed in any one of claims 8-12, wherein no emulsifier is added to the aqueous emulsion.

14. The aqueous emulsion as claimed in any one of claims 8-13, wherein the at least one anti-freeze agent is a compound selected from the group consisting of methanol, ethanol, propanol, isopropanol, (ethylene) glycol, propanediol, glycerol, and combinations thereof, preferably methanol, and is used in a quantity such that the emulsion does not freeze at a temperature of -10 °C.

15. A process for preparing a polyvinyl chloride polymer with a normalized drying rate of greater than 0.840 at time t* of 0.5 (as determined by the method set out in *"Dehydration and drying poly(vinyl)chloride (PVC) porous grains: 2. Thermogravimetric analysis and numerical simulations",* P. Agaciak et al. / Colloids and Surfaces A: Physicochem. Eng. Aspects 470 (2015) 120-129), the process comprising polymerizing monovinyl chloride monomer using an aqueous organic peroxide emulsion, wherein the aqueous organic peroxide emulsion comprises from 0 to 0.17 wt.% emulsifier.
